# EUROPÄISCHE PATENTANMELDUNG

(11) **EP 1 629 881 A1**
(43) Veröffentlichungstag der Anmeldung: **01.03.2006**
(21) Anmeldenummer: 04018101.8
(22) Anmeldetag: 29.07.2004
(51) Int. Cl.: B01D 63/08, C02F 1/44, C02F 3/12

(54) **Kläranlage mit Membranmodul-Filterung**

(71) Anmelder: Baumann, Markus, 32602 Vlotho (DE)
(72) Erfinder: Höwener, Jens, 32457 Porta Westfalica (DE)
(74) Vertreter: TER MEER - STEINMEISTER & PARTNER GbR

(57) **Zusammenfassung**

Die Erfindung betrifft eine Kläranlage mit wenigstens einer Vorklärkammer (10) und einer Klärkammer (12), einer Verbindungsleitung (16), die die Kammern über eine Trennwand (14) zwischen beiden hinweg miteinander verbindet, einer der Verbindungsleitung zugeordneten Pumpe (18) und einem Membranmodul (32) innerhalb der Klärkammer zur Abtrennung von festen Bestandteilen aus dem biologisch geklärten Wasser sowie einem Belüftungsgehäuse (24) unterhalb des Membranmoduls, in dem sich ein Belüfter befindet, dessen aufsteigende Luftblasen das umgebende Wasser nach dem Prinzip des Drucklufthebers zu dem Membranmodul anheben. Das Belüftungsgehäuse (24) weist einen Einlaß (30) an einer Seite auf, durch den Wasser aus der Klärkammer (12) in das Belüftungsgehäuse (24) eintreten kann, die Pumpe (18) ist auf der Seite der Klärkammer (12) an der Verbindungsleitung (16) angebracht und von der Pumpe (18) geht eine Zweigleitung (22) aus, die in das Belüftungsgehäuse im wesentlichen auf der dem Einlaß (30) gegenüberliegenden Seite eintritt.

## Beschreibung

Die Erfindung betrifft eine Kläranlage mit wenigstens einer Vorklärkammer und einer Klärkammer, einer Verbindungsleitung, die die Kammern über eine Trennwand zwischen beiden hinweg miteinander verbindet, einer der Verbindungsleitung zugeordneten Pumpe und einem Membranmodul innerhalb der Klärkammer zur Abtrennung von festen Bestandteilen aus dem biologisch geklärten Wasser sowie einem Belüftungsgehäuse unterhalb des Membranmoduls, in dem sich ein Belüfter befindet, dessen aufsteigende Luftblasen das umgebende Wasser nach dem Prinzip des Drucklufthebers zu dem Membranmodul anheben.

Eine Kläranlage mit einem Membranmodul ist beispielsweise aus der EP 0 662 341 B1 bekannt, in deutscher Übersetzung erschienen als DE 692 05 198 T2. Bei Membranmodulen dieser Art ist eine größere Anzahl von Filterplatten in einem vorbestimmten, relativ geringen Abstand parallel zueinander mit vertikaler Orientierung angeordnet. Das zu behandelnde Wasser steigt von unten auf und gelangt zwischen die Filterplatten, durch die es in flüssige und feste Bestandteile getrennt wird. Die flüssigen Bestandteile, bei Kläranlagen in der Regel reines Wasser, werden nach außen abgeführt. Die festen Bestandteile werden in geeigneter Weise entsorgt.

Die Aufwärtsbewegung des Wassers wird bei der bekannten Anlage dadurch erreicht, dass sich unterhalb der Filterplattenanordnung ein Belüfter befindet, von dem Luftblasen aufsteigen, die das Wasser aufwärts zwischen die Filterplatten transportieren. Der Belüfter befindet sich in einer Belüfterkammer, die einen Einlaß zur Aufnahme des zu behandelnden Wassers aufweist. Die Platten des Membranmoduls befinden sich ebenfalls in einer Kammer.

Damit die gesamte ausströmende Luft des Belüfters in die Plattenspalten des Membranmoduls gelangt, sind die beiden genannten Gehäuse möglichst geschlossen auszuführen. Auf diese Weise gelangt das zu filternde Abwasser entsprechend dem Prinzip des Drucklufthebers aus dem Belüftungsgehäuse in das Gehäuse des Membranmoduls und hier in die Plattenspalten.

Untersuchungen haben ergeben, dass bei dieser Verfahrensweise im Belüftungsgehäuse faserige Bestandteile und andere Grobstoffe angesammelt werden können, die im ungünstigsten Fall dazu führen, dass sich die Plattenspalten des Membranmoduls zusetzen und das aufströmende Wasser nicht mehr in diese Plattenspalten gelangen kann.

Der Erfindung liegt daher die Aufgabe zugrunde, eine Klärvorrichtung der obigen Art so auszugestalten, dass grobe Schmutzpartikel so weit wie möglich am Aufsteigen in Richtung des Membranmoduls gehindert werden.

Zur Lösung dieser Aufgabe ist die erfindungsgemäße Vorrichtung dadurch gekennzeichnet, dass das Belüftungsgehäuse einen Einlaß an einer Seite aufweist, durch den Wasser aus der Klärkammer in das Belüftungsgehäuse eintreten kann, dass die Pumpe auf der Seite der Klärkammer an der Verbindungsleitung angebracht ist und dass von der Pumpe eine Zweigleitung ausgeht, die in das Belüftungsgehäuse im wesentlichen auf der dem Einlaß gegenüberliegenden Seite eintritt.

Die auf der Seite der Klärkammer angeordnete Pumpe wird nur dazu benötigt, mithilfe eines relativ kurzen Pumpenstoßes die Verbindungsleitung mit Wasser zu füllen. Anschließend saugt die auf der Seite der Klärkammer vorhandene Wassersäule in der Verbindungsleitung ohne Zuhilfenahme einer Pumpe das Wasser aus der Vorklärkammer in die Klärkammer, bis der Wasserspiegel in beiden benachbarten Kammern die gleiche Höhe erreicht hat. Auf diese Weise wird in vorgegebenen Zeitabständen jeweils durch einen Pumpenstoß der Pumpe die Überleitung von Wasser aus der Vorklärkammer, die im wesentlichen dem Absetzen von Feststoffpartikeln dient, in die Klärkammer eingeleitet. Das Herüberziehen des Wassers aus der Vorklärkammer kann dabei mit sehr geringem Energieaufwand erfolgen.

Erfindungsgemäß wird die Pumpe zusätzlich dazu eingesetzt, in dem Belüftungsgehäuse schwebende oder auf dem Belüfter liegende Feststoffpartikel so weit wie möglich aus dem Belüftungsgehäuse zu entfernen.

Dies geschieht dadurch, dass von der Verbindungsleitung eine Zweigleitung abgeleitet wird, die in das Belüftungsgehäuse mündet, und zwar insbesondere derart im Verhältnis zur Anordnung der Einlaßöffnung das Belüftungsgehäuse, dass der durch Zweigleitung eingetragene Wasserstoß von der gegenüberliegenden Seite kommt.

Die Pumpe wird nur in größeren Zeitabständen jeweils dann eingeschaltet, wenn das Niveau in der Vorklärkammer einen vorgegebenen Höhenunterschied gegenüber dem Niveau in der Klärkammer erreicht hat. Die über die Zweigleitung abgegebenen Pumpenstöße treffen daher in das Belüftungsgehäuse ebenfalls nur in größeren Zeitabständen und für eine kurze Zeit ein. Der Wasserstoß tritt in das Belüftungsgehäuse daher nur ein, wenn sich einige feste Schmutzpartikel angesammelt haben, ohne dass in das Belüftungsgehäuse eine übermäßige Unruhe erzeugt wird.

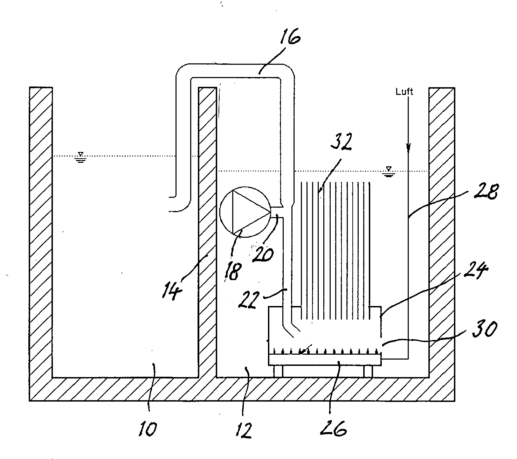

Im folgenden werden bevorzugte Ausführungsbeispiele der Erfindung anhand der beigefügten Zeichnung näher erläutert.

Die einzige Figur ist eine schematische senkrechte Schnittdarstellung einer erfindungsgemäßen Kläranlage.

In der Zeichnung ist eine Kläranlage im senkrechten Schnitt dargestellt, die eine Vorklärkammer 10 und eine Klärkammer 12 umfaßt. Weiter Kammern können vorgesehen sein, sind in den Zeichnungen aber nicht dargestellt. Die Kammern 10,12 können entgegen der Zeichnung in getrennten Behältern untergebracht sein.

Zwischen den beiden Kammern befindet sich eine Trennwand 14. Klärbehälter dieser Art werden beispielsweise gebildet durch die weit verbreiteten, so genannten Dreikammergruben.

In der Vorklärkammer 10 trifft das frische Abwasser in nicht dargestellter Weise ein. In dieser Vorklärkammer setzen sich insbesondere feste Schmutzpartikel mit einer gewissen Sinkgeschwindigkeit ab.

Von der Klärkammer aus wird das gereinigte Abwasser abgeführt in einen Vorfluter, einen nachgeschalteten Schönungsteich oder dergleichen. Das in der Vorklärkammer 10 angesammelte Abwasser wird portionsweise oder von Zeit zu Zeit in die Klärkammer überführt, bis sich die beiden Niveaus angeglichen haben.

Zu diesem Zweck ist eine Verbindungsleitung 12 zwischen den beiden Kammern vorgesehen, die oben über die Trennwand 14 hinweggeführt ist. Diese Verbindungsleitung 16 ist auf der Seite der Klärkammer 12 mit einer Pumpe 18 verbunden, die Wasser aus der Klärkammer 12 in die Verbindungsleitung 16 hineinpumpt und diese in einem kurzen Pumpenstoß mit Wasser füllt. Wenn die Pumpe 18 dann abgeschaltet wird, zieht die auf der Seite der Klärkammer 12 befindliche Wassersäule innerhalb der Verbindungsleitung 16 Wasser durch die Verbindungsleitung von der Vorklärkammer 10 in die Klärkammer 12. Dieser Wassertransport von der Vorklärkammer zur Klärkammer erfolgt ohne Einsatz der Pumpe und ohne Energiekosten. Die erreichten, relativ geringen Strömungsgeschwindigkeiten sind bei weitem ausreichend. Die Anordnung der Pumpe auf der Seite der Klärkammer hat im übrigen den Vorteil, dass die Pumpe auch zur Belebtschlammrückführung verwendet werden kann. Es ist daher nicht notwendig, zwei gesonderte Pumpen für die Belebtschlammrückführung einerseits und den Wassertransport in die Klärkammer andererseits einzusetzen. Pumpen stellen einen erheblichen Kostenfaktor bei Kläranlagen der hier interessierenden Art dar.

Von dem Ausgang der Pumpe, der mit 20 bezeichnet ist, geht eine Zweigleitung 22 senkrecht nach unten aus, die in einem Belüftungsgehäuse 24 eintritt. In diesem Belüftungsgehäuse befindet sich ein Belüfter 26, der mit einer von außen zugeführten Luftleitung 28 verbunden ist, die beispielsweise von einem Luftkompressor ausgeht. Der Belüfter 26 nimmt bei der dargestellten Ausführungsform im wesentlichen die gesamte Bodenfläche des Belüftungsgehäuses 24 ein. Auf der rechten Seite in der Zeichnung ist ein Einlaß 30 des Belüftungsgehäuses 24 angedeutet.

Das Belüftungsgehäuse 24 ist mit einem Membranmodul 32 dicht verbunden, der auf einer Anzahl von senkrechten, parallelen, dicht nebeneinander liegenden Filterplatten besteht.

Aufgrund der dichten Verbindung zwischen dem Membranmodul 32 und dem Belüftergehäuse wird die gesamte Luftkammer, die von dem Belüfter 26 aufsteigt, zusammen mit dem umgebenden Wasser in die Zwischenräume zwischen den Filterplatten eingeleitet. Dabei wird das in der Klärkammer 12 enthaltene Abwasser laufend in das Belüftungsgehäuse 24 hineingezogen.

Beim laufenden Durchgang des Wassers aus der Klärkammer 12 in das Belüftergehäuse und das angrenzende Membranmodul sammeln sich in dem Belüftergehäuse feste, zumeist schwebende Schmutzpartikel an, zu denen beispielsweise faserige Bestandteile gehören. Diese festen Schmutzpartikel werden laufend mit dem aufsteigenden Luftblasenstrom zusammen in die Zwischenräume zwischen die Filterplatten transportiert, so dass sich diese nach und nach vollständig zusetzen können. Darüber hinaus bildet sich auf dem Belüfter 26 eine Schmutzpartikelschicht, bei der ständig die Gefahr besteht, dass die Teile der Schicht zusammen mit den Luftblasen nach oben getragen werden.

Erfindungsgemäß mündet daher die Zweigleitung 22 aus der Pumpe 18 in dem Belüftungsgehäuse 24 in einer Position gegenüber dem Einlaß 30, und das untere Ende der Zweigleitung knickt in Richtung des Einlasses 30 ab.

In den durch das Herüberziehen von Klärwasser aus der Vorklärkammer in die Klärkammer bestimmten Intervallen wird durch die Zweigleitung 22 ein Wasserstoß in das Belüftungsgehäuse 24 abgegeben. Dieser Wasserstoß drängt die in dem Belüftungsgehäuse enthaltenen festen Schmutzpartikel durch den Einlaß 30 des Belüftungsgehäuses in die Klärkammer 12 hinaus.

Diese Maßnahme erfordert keine nennenswerte zusätzliche Energie.

## Patentansprüche

1. Kläranlage mit wenigstens einer Vorklärkammer (10) und einer Klärkammer (12), einer Verbindungsleitung (16), die die Kammern über eine Trennwand (14) zwischen beiden hinweg miteinander verbindet, einer der Verbindungsleitung zugeordneten Pumpe (18) und einem Membranmodul (32) innerhalb der Klärkammer zur Abtrennung von festen Bestandteilen aus dem biologisch geklärten Wasser sowie einem Belüftungsgehäuse (24) unterhalb des Membranmoduls, in dem sich ein Belüfter befindet, dessen aufsteigende Luftblasen das umgebende Wasser nach dem Prinzip des Drucklufthebers zu dem Membranmodul anheben, **dadurch gekennzeichnet, dass** das Belüftungsgehäuse (24) einen Einlaß (30) an einer Seite aufweist, durch den Wasser aus der Klärkammer (12) in das Belüftungsgehäuse (24) eintreten kann, dass die Pumpe (18) auf der Seite der Klärkammer (12) an der Verbindungsleitung (16) angebracht ist und dass von der Pumpe (18) eine Zweigleitung (22) ausgeht, die in das Belüftungsgehäuse im wesentlichen auf der dem Einlaß (30) gegenüberliegenden Seite eintritt.
